# EUROPÄISCHE PATENTSCHRIFT

(11) **EP 1 878 608 B1**
(45) Veröffentlichungstag und Bekanntmachung des Hinweises auf die Patenterteilung: **05.03.2014**
(21) Anmeldenummer: 07111932.5
(22) Anmeldetag: 06.07.2007
(51) Int. Cl.: B60N 2/22, B60N 2/18, B60N 2/02

(54) **Kraftfahrzeugsitz**
Motor vehicle seat
Siège de véhicule automobile

(30) Priorität: 12.07.2006 DE 102006032151
(43) Veröffentlichungstag der Anmeldung: 16.01.2008
(73) Patentinhaber: GRAMMER AG, 92224 Amberg (DE)
(72) Erfinder: Ott, Richard, 92245 Kümmersbruck (DE); Hermann, Meiller, 92533 Wernberg-Köblitz (DE)
(74) Vertreter: Hannke, Christian

(56) Entgegenhaltungen:
- EP-A- 1 057 725
- DE-A1- 4 405 653
- DE-A1- 19 853 156
- US-A- 5 735 574
- US-A1- 2005 258 677

## Beschreibung

Die Erfindung betrifft einen Kraftfahrzeugsitz mit einem Grundrahmen zur Anbringung an einem Kraftfahrzeug sowie mit einem Sitzrahmen und mit einem Rückenlehnenrahmen, die verstellbar an dem Grundrahmen angebracht sind und die mittels einer Synchronisierungseinrichtung derart zwangsgekoppelt sind, dass bei einer Bewegung des Rückenlehnenrahmens relativ zum Grundrahmen eine zwangsläufige Schwenkbewegung des Sitzrahmens relativ zum Grundrahmen und/oder zum Rückenlehnenrahmen stattfindet, gemäß dem Oberbegriff des Patentanspruches 1.

Ein bekannter Kraftfahrzeugsitz weist einen Sitzrahmen und einen an dem Sitzrahmen angebrachten Rückenlehnenrahmen auf, die jeweils für die Aufnahme von Polstermitteln vorgesehen sind, um für einen Fahrzeuginsassen eines Kraftfahrzeugs eine bequeme und sichere Sitzmöglichkeit bereitstellen zu können. Der Sitzrahmen ist für eine verschiebbare Anbringung im Kraftfahrzeug ausgeführt, um eine Anpassung an unterschiedliche Größen der Fahrzeuginsassen zu ermöglichen. Der Rückenlehnenrahmen ist schwenkbeweglich relativ zum Sitzrahmen angebracht und ermöglicht dadurch eine Verstellung eines Neigungswinkels, insbesondere gegenüber einer Vertikalrichtung.

Aus der DE 199 27 508 A1 ist ein Sitz für einen Insassen eines Kraftfahrzeugs mit einem Untergestell, das fest mit einem Boden des Kraftfahrzeugs verbindbar ist, sowie mit einem auf dem Untergestell montierten Sitzteil mit einer Sitzfläche und einer Rückenlehne, das bei einem Unfall durch eine vom Fahrzeuginsassen auf den Sitz ausgeübte Kraft um eine quer zur Fahrtrichtung verlaufende Achse verschwenkt wird, bekannt. Um die Rückenlehne bei einem Heckaufprall auf das Fahrzeug durch die vom Fahrzeuginsassen auf den Sitz ausgeübten Trägheitskräfte steiler zu stellen und dadurch den sogenannten Ramping-Effekt durch eine steilere Rückenlehne zu vermeiden oder abzuschwächen, wird in der DE 199 27 508 A1 vorgeschlagen, dass die Achse oberhalb der Sitzfläche angeordnet ist und dass das Sitzteil mit seinem in Fahrtrichtung vorderen Ende abgesenkt und mit seinem in Fahrtrichtung hinteren Ende angehoben wird, wenn bei einem Aufprall auf das Heck des Kraftfahrzeugs die Kraft oder eine Beschleunigung des Kraftfahrzeugs einen bestimmten Wert überschreitet.

Die DE 35 41 299 C2 beschreibt einen Sitz mit einer Rückenlehne und einem Sitzpolster sowie einem Rückenlehnenpolster, wobei sich das Rückenlehnenpolster nach hinten neigt und das Sitzpolster sich gleichzeitig nach vorne verschiebt, wenn ein Sitzbenutzer von einer im Wesentlichen aufrechten Sitzstellung in eine nach hinten geneigte Sitzstellung wechselt, und wobei Rückenlehnenpolster und Sitzpolster über eine gemeinsame Schwenkachse verbunden sind, die in stationären Führungen verschieblich ist.

Aus der EP 0 229 625 ist ein Fahrzeugsitz für öffentliche Verkehrsmittel mit einem bodenfesten Sitzuntergestell und einer starren, aus Sitzteil und Rückenteil bestehenden Sitzschale, die mit Hilfe eines schwenkbaren Trägers auf dem Sitzuntergestell gehalten und mit seiner Hilfe aus einer Sitzlage in eine Liegelage verschwenkt werden kann, bekannt.

US 2005/0258677 offenbart einen Fahrzeugsitz mit einer zweiteiligen Rückenlehne. Der erste Teil der Rückenlehne wird hierbei vom zweiten Teil der Rückenlehne zumindest teilweise umschlossen und bildet eine Führung, über die der innere Teil der Rückenlehne verschiebbar angeordnet ist. Es geht aus dieser Druckschrift hervor, dass die untere Kante des inneren Rahmens mit dem rückseitigen Ende des Sitzpolsters verbunden ist, damit sie um eine Achse 76 drehbar ist. Eine vertikale Einstellung des Sitzpolsters bewirkt entsprechende Verschiebebewegurigen des inneren Rahmens relativ gegenüber dem äußeren Rahmen im Verlauf einer definierten Führung.

DE 44 05 653 A1 offenbart eine Sitzanordnung, in der das Sitzflächenteil um eine virtuelle Achse schwenkbar ist und das Rückenlehnenteil um eine reale Achse drehbar ist. Mittels einer Gestängeanordnung, bestehend aus Armabschnitte, Verbindungsgliedern und Lagern erfolgt die Auslenkung des Sitzflächenteiles in Abhängigkeit der Rotationsbewegung der Rückenlehne. Hierbei muss eine hohe Anzahl unterschiedlicher Komponenten eingesetzt werden, um die gewünschte Bewegungscharakteristik zu erhalten, wodurch sich aufgrund der Montage, Wartung und Konstruktion hohe Kosten und hohe Fehleranfälligkeit ergeben.

Aufgabe der Erfindung ist es daher, einen Fahrzeugsitz zur Verfügung zu stellen, der in einfacher und sicherer Weise eine günstige und funktionssichere Möglichkeit zum Umsetzen einer gewünschten Bewegungscharakteristik ermöglicht.

Diese Aufgabe wird durch die Merkmale des Patentanspruches 1 gelöst.

Ein wesentlicher Punkt der Erfindung liegt darin, dass bei einem Kraftfahrzeugsitz der eingangs genannten Art eine Synchronisierungseinrichtung für eine nichtproportionale Schwenkbewegung eines Sitzrahmens bei einer Bewegung eines Rückenlehnenrahmens relativ zu einem Grundrahmen ausgebildet ist. Die Synchronisierungseinrichtung weist eine erste, dem Sitzrahmen zugeordnete, vorzugsweise konvex geformte Steuerfläche und eine zweite, dem Rückenlehnenrahmen zugeordnete, vorzugsweise konvex geformte Steuerfläche auf, die für eine zwangsläufige Bewegungsübertragung zwischen dem Sitzrahmen und dem Rückenlehnenrahmen ausgeführt ist.

Damit wird erreicht, dass eine Schwenkbewegung des Rückenlehnenrahmens gegenüber dem Grundrahmen eine zwangsläufige Relativbewegung des Sitzrahmens gegenüber dem Rückenlehnenrahmen in Form einer Schwenkbewegung hervorruft. Dies ermöglicht eine besonders vorteilhafte Anpassung der Ausrichtung von Sitzrahmen und Rückenlehnenrahmen an anatomischen Gegebenheiten, die vom Aufbau der menschlichen Wirbelsäule und des übrigen Knochengerüstes bestimmt werden. Bei einem bekannten Kraftfahrzeugsitz liegt eine zwar verstellbare, aber von der Verstellbewegung des Sitzrahmens unbeeinflusste Rückenlehnenrahmenneigung vor. Demgegenüber wird durch die Synchronisierungseinrichtung eine Kopplung zwischen der Verstellung des Sitzrahmens und der Neigungseinstellung des Rückenlehnenrahmens verwirklicht, wobei ein nichtproportionaler Zusammenhang zwischen den beiden Verstellbewegungen realisiert ist, um Aspekte wie eine Krümmung der Wirbelsäule des Benutzers und eine Beckenstellung des Benutzers besonders vorteilhaft berücksichtigen zu können.

Der Sitzrahmen ist schwenkbeweglich an dem Grundrahmen angebracht, wobei eine virtuelle Schwenkachse für den Sitzrahmen beabstandet vom Sitzrahmen in einem dem Grundrahmen abgewandten Bereich, vorzugsweise oberhalb einer Sitzfläche des Sitzrahmens, besonders bevorzugt ortsfest, angeordnet ist. Dadurch kann eine komfortable Ausrichtung des Sitzrahmens und der daran anbringbaren Sitzfläche erreicht werden. Der Sitzrahmen ist derart an dem Grundrahmen mittels: Hebelführungen, Gleitlagerungen, Schwenkgelenken oder Kombinationen davon, an dem Grundrahmen angebracht, dass eine Schwenkachse für die Schwenkbewegung des Sitzrahmens beabstandet, also abseits des Sitzrahmens liegt und diesen nicht schneidet. Es handelt sich also nicht um eine körperlich verwirklichte Schwenkachse sondern lediglich um eine durch Schwenkmittel definierte, nichtkörperliche, also virtuelle Schwenkachse. Vorzugsweise ist die virtuelle Schwenkachse bei einem in ein Kraftfahrzeug eingebauten Kraftfahrzeugsitz oberhalb der Sitzfläche angeordnet. Besonders bevorzugt ist die Schwenkachse im Wesentlichen horizontal quer zur Fahrtrichtung des Kraftfahrzeugs ausgerichtet und liegt in einem Bereich, in dem ungefähr die Hüfte des Benutzers angeordnet ist, wenn der Benutzer auf dem Kraftfahrzeugsitz sitzt. Damit kann eine besonders vorteilhafte Kippung des Sitzrahmens vorgenommen werden, um eine für den Benutzer angenehme Stellung des Hüftgelenks und der auf der Sitzfläche aufliegenden Oberschenkel zu erreichen.

Es ist vorgesehen, dass eine Schwenkachse des Rückenlehnenrahmens im Wesentlichen parallel zur Schwenkachse des Sitzrahmens ausgerichtet ist und den Rückenlehnenrahmen schneidet. Damit findet eine anatomisch korrekte Verschwenkung der Rückenlehne statt, wenn durch eine Verstellung des Rückenlehnenrahmens eine zwangsläufige Schwenkbewegung des Sitzrahmens hervorgerufen wird.

Es ist vorgesehen, dass die Synchronisierungseinrichtung die erste, dem Sitzrahmen zugeordnete, vorzugsweise konvex geformte, Steuerfläche, und die zweite, dem Rückenlehnenrahmen zugeordnete, vorzugsweise konvex geformte, Steuerfläche aufweist, die für eine zwangsläufige Bewegungsübertragung zwischen dem Sitzrahmen und dem Rückenlehnenrahmen ausgeführt sind. Mit Hilfe der gegenüberliegend in Berührkontakt angeordneten Steuerflächen kann eine einfach herzustellende, zuverlässig funktionsfähige und kostengünstige Synchronisierungseinrichtung verwirklicht werden. Dabei dienen die vorzugsweise konvex geformten Steuerflächen der Kraft- und Bewegungsübertragung zwischen dem Sitzrahmen und dem Rückenlehnenrahmen, wobei durch die konvexe Gestaltung der Steuerflächen eine statische Überbestimmung zwischen dem Sitzrahmen und dem Rückenlehnenrahmen vermieden werden kann. Eine derartige statische Überbestimmung könnte beispielsweise bei Verwendung von Lenkhebeln zur Kraftübertragung auftreten und könnte zum Klemmen der Synchronisierungseinrichtung führen. Bei einer bevorzugten Ausführungsform der Erfindung sind die Steuerflächen des Sitzrahmens und des Rückenlehnenrahmens derart zueinander angeordnet, dass bei einer Relativbewegung des Sitzrahmens gegenüber dem Grundrahmen eine reine Abwälzbewegung der Steuerflächen stattfindet. Bei einer reinen Abwälzbewegung findet zumindest nahezu keine, vorzugsweise keine, Gleitbewegung zwischen den Steuerflächen statt, vielmehr gleichen sich bei der Durchführung der Relativbewegung die Oberflächengeschwindigkeiten der gegenüberliegenden Steuerflächen, so dass zumindest nahezu keine Reibung zwischen den Steuerflächen vorliegt und somit nahezu kein Verschleiß auftritt.

In weiterer Ausgestaltung der Erfindung ist vorgesehen, dass der Sitzrahmen in einem dem Rückenlehnenrahmen abgewandten Vorderbereich eine bogenförmige Langlochführung aufweist, die mittels eines Führungszapfens am Grundrahmen angebracht ist, und dass der Grundrahmen in einem dem Rückenlehenrahmen zugewandten Hinterbereich eine korrespondierend zum Sitzrahmen geformte, abschnittsweise zylinderhülsenförmige Gleitfläche aufweist, auf der der Sitzrahmen mittels der Synchronisierungseinrichtung zwangsgeführt verschiebbar aufliegt. Durch die Langlochführung im Vorderbereich des Sitzrahmens, die vorzugsweise in der Art einer Führungsnut oder einer umlaufend geschlossenen Ausnehmung verwirklicht werden kann, ist sichergestellt, dass eine Schwenkbegrenzung für die Bewegung des Sitzrahmens vorliegt, die durch die Wirkverbindung des am Grundrahmen befestigten Führungszapfens mit dem geschlossenen Endbereich des Langlochs verwirklicht wird. Somit kann selbst bei hohen Beschleunigungen des Sitzrahmens, wie sie beispielsweise bei einem Aufprall des Kraftfahrzeugs auf ein Hindernis auftreten können, eine sichere Führung des Sitzrahmens am Grundrahmen gewährleistet werden kann. Bei der im hinteren Sitzrahmenabschnitt verwirklichten Gleitführung ist von entscheidender Bedeutung, dass an dieser Stelle die durch die Gewichtskraft des Benutzers bedingte, höchste Belastung des Sitzrahmens vorliegt, die zu einer hohen Flächenpressung in einem Gelenk zwischen Sitzrahmen und Grundrahmen führt, wenn nicht eine entsprechend große Gleitlageroberfläche zur Verfügung gestellt wird. Durch die zylinderhülsenförmige Gleitfläche kann gewährleistet werden, dass in einfacher Weise an dem Sitzrahmen und am Grundrahmen eine großflächige Gleitlagerung mit geringer Flächenpressung verwirklicht werden kann. Durch das Zusammenwirken der bogenförmigen Langlochführung und der zylinderhülsenförmigen Gleitführung, deren Kreismittelpunkte zumindest im Wesentlichen konzentrisch zueinander angeordnet sind, wird die virtuelle Schwenkachse, die vorzugsweise oberhalb der Sitzfläche angeordnet ist, bestimmt. Ein an sich ohne Weiteres mögliches Abheben des Sitzrahmens vom Grundrahmen wird durch die Synchronisierungseinrichtung verhindert, die mit ihren nockenförmigen Steuerflächen als Niederhalter für den Sitzrahmen dient und auch im Falle einer hohen Beschleunigung bei einem Aufprall eine formschlüssige Kopplung zwischen Sitzrahmen und Rückenlehnenrahmen gewährleistet.

In weiterer Ausgestaltung der Erfindung ist vorgesehen, dass die Synchronisierungseinrichtung für gleichsinnige Schwenkbewegungen von Sitzrahmen und Rückenlehnenrahmen ausgebildet ist. Bei gleichsinnigen Schwenkbewegungen von Sitzrahmen und Rückenlehne führt eine Bewegung des Sitzrahmens im Uhrzeigersinn zu einer ebenfalls im Uhrzeigersinn stattfindenden Schwenkbewegung des Rückenlehnenrahmens und umgekehrt. Damit kann eine besonders anatomische Ausrichtung der Rückenlehne gegenüber dem Sitzrahmen verwirklicht werden.

In weiterer Ausgestaltung der Erfindung ist vorgesehen, dass der Rückenlehnenrahmen eine der Synchronisierungseinrichtung zugeordnete Verstelleinrichtung aufweist, die für eine Neigungsverstellung des Rückenlehnenrahmens unabhängig von einer Stellung des Sitzrahmens ausgebildet ist. Die von der Synchronisierungseinrichtung unabhängige Einstellung der Neigung des Rückenlehnenrahmens gegenüber einer Vertikalrichtung ermöglicht die individuelle Anpassung des Kraftfahrzeugsitzes an die Bedürfnisse des Benutzers. Vorzugsweise ist die Verstelleinrichtung derart ausgeführt, dass eine Schwenkachse der Verstelleinrichtung parallel, besonders bevorzugt konzentrisch zur Schwenkachse der Synchronisierungseinrichtung ausgerichtet ist und damit gewissermaßen eine Übersteuerung der durch die Synchronisierungseinrichtung vorgegebenen Zwangskopplung zwischen Sitzrahmen und Rückenlehnenrahmen ermöglicht. Die Verstelleinrichtung kann, wie übrigens auch die anderen Einstellmöglichkeiten am Kraftfahrzeugsitz, manuell und/oder kraftunterstützt, insbesondere mit Gasfederunterstützung oder elektromotorischer Unterstützung, angesteuert werden.

In weiterer Ausgestaltung der Erfindung ist vorgesehen, dass dem Rückenlehnenrahmen eine Konturverstelleinrichtung zugeordnet ist, die vorzugsweise mit der Synchronisierungseinrichtung zwangsgekoppelt ist, und die für eine Veränderung einer Profilierung eines an dem Rückenlehnenrahmen anbringbaren Rückenpolsters vorgesehen ist. Mit einer Veränderung der Position des Rückenlehnenrahmens und einer damit einhergehenden Veränderung der Neigung des Sitzrahmens nimmt der Benutzer des Kraftfahrzeugsitzes unterschiedliche Sitzpositionen ein, in denen auch eine unterschiedliche Unterstützung der Wirbelsäule gefordert ist. Um diesen unterschiedlichen Anforderungen gerecht zu werden, ist dem Rückenlehnenrahmen eine Konturverstelleinrichtung zugeordnet, die es ermöglicht, eine Profilierung der Rückenlehne zu verändern, in dem beispielsweise ein unterer, der Sitzfläche benachbarter Bereich der Rückenlehne mehr oder weniger stark von der Rückenlehne ausgewölbt wird, um eine stärkere oder weniger starke Unterstützung der Lendenwirbelsäule des Benutzers zu ermöglichen. Durch die vorzugsweise vorgesehene Zwangskopplung der Konturverstelleinrichtung mit der Synchronisierungseinrichtung kann erreicht werden, dass jedem Neigungswinkel des Rückenlehnenrahmens gegenüber einer Vertikalrichtung eine vorgebbare Konturierung oder Profilierung der Rückenlehne zugeordnet ist, so dass beispielsweise bei einer aufrechten, also nahezu parallel zur Vertikalrichtung ausgerichteten Rückenlehne eine starke Profilierung bzw. Auswölbung vorliegt und somit eine gute Abstützung der Lendenwirbelsäule sichergestellt ist. Demgegenüber kann bei einer stark gegenüber der Vertikalrichtung geneigten Rückenlehne eine geringe Profilierung der Rückenlehne vorgesehen sein, um eine besonders bequeme Sitzposition zu ermöglichen.

In weiterer Ausgestaltung der Erfindung ist vorgesehen, dass die Konturverstelleinrichtung zwei sich jeweils im Wesentlichen längs von Seitenwangen des Rückenlehnenrahmens erstreckte, schwenkbar am Rückenlehnenrahmen angebrachte, gekrümmt ausgeführte Konturstangen aufweist, die vorzugsweise mittels einer zwischen den Seitenwangen ausschwenkbar angeordneten Koppelstange zwangsgekoppelt sind. Mit Hilfe der jeweils in der Art eines umgekehrten Fragezeichens gekrümmten Konturstangen, die also in einem dem Sitzrahmen benachbarten Bereich eine stärkere Krümmung aufweisen, während sie in einem vom Sitzrahmen entfernten Bereich deutlich weniger gekrümmt ausgeführt sind, kann eine lokale Auswölbung der Rückenlehne bewirkt werden. Die Konturstangen erstrecken sich im Wesentlichen parallel zu den Seitenwangen, also zu den im Wesentlichen vertikal verlaufenden Rahmenteilen des Rückenlehnenrahmens, und sind am Rückenlehnenrahmen schwenkbeweglich angebracht. Dabei verläuft eine Schwenkachse für die Konturstangen im Wesentlichen parallel zu den schwächer gekrümmten Abschnitten der Konturstangen, so dass hierdurch nahezu keine Profilveränderung vorgenommen wird, wenn die Konturstangen verschwenkt werden. Hingegen schwenken die im Bereich benachbart zum Sitzrahmen stark bogenförmig ausgestellten Bereiche der Konturstangen aus, wenn eine Schwenkbewegung der Konturverstelleinrichtung vorgenommen wird, um die Profilierung der Rückenlehne zu verändern. Dabei werden die Konturstangen gegenläufig verschwenkt und sind durch eine in im Wesentlichen horizontaler Richtung verlaufende Koppelstange miteinander kinematisch gekoppelt, um eine symmetrische Profilierung der Rückenlehne zu gewährleisten und eine Ansteuerung der Konturstangen zu vereinfachen.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind. Dabei zeigt:
- Fig. 1: eine perspektivische und schematische Darstellung eines Kraftfahrzeugsitzes gemäß einer ersten Ausführungsform der Erfindung,
- Fig. 2: in einer Seitenansicht den Kraftfahrzeugsitz nach der Fig. 1,
- Fig. 3: in einer schematischen Seitenansicht einen mit einer Konturverstelleinrichtung versehenen Kraftfahrzeugsitz gemäß einer zweiten Ausführungsform der Erfindung.

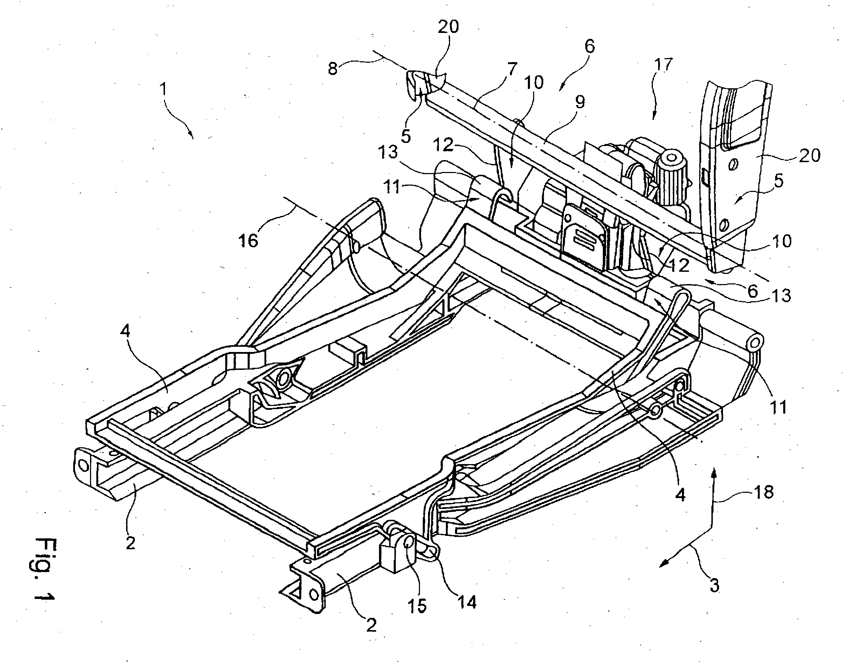

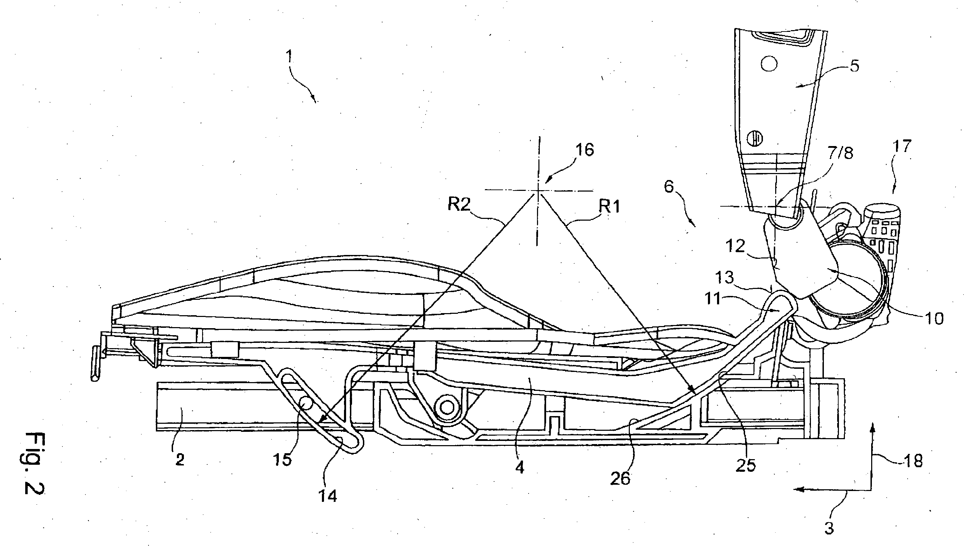

In den Fig. 1 und 2 ist ein Kraftfahrzeugsitz 1 mit einem Grundrahmen 2 zur Anbringung an einen nicht dargestellten Fahrzeugboden eines Kraftfahrzeugs dargestellt. Der Grundrahmen 2 ist für eine längsverschiebbare Anbringung an nicht dargestellten, fahrzeugfesten Führungsschienen vorgesehen und kann bei Deaktivierung einer ebenfalls nicht dargestellten Arretierungseinrichtung in und gegen eine Fahrtrichtung 3 des Kraftfahrzeugs, die im Wesentlichen einer Horizontalrichtung entspricht, verschoben werden. An dem Grundrahmen 2 sind ein Sitzrahmen 4 und ein Rückenlehnenrahmen 5 jeweils unmittelbar schwenkbeweglich verstellbar angebracht, die für die Aufnahme und Abstützung nicht dargestellter Sitzpolster vorgesehen sind und eine Gewichtskraft eines Benutzers, der auf dem Kraftfahrzeugsitz Platz nimmt, auf die Führungsschienen des Kraftfahrzeugs übertragen können.

Der Sitzrahmen 4 und der Rückenlehnenrahmen 5 sind mittels einer Synchronisierungseinrichtung 6 zwangsgekoppelt, so dass bei einer Bewegung des Rückenlehnenrahmens 5 relativ zum Grundrahmen 2 eine zwangsläufige Schwenkbewegung des Sitzrahmens 4 um eine horizontal verlaufende, orthogonal zur Fahrtrichtung 3 ausgerichtete Schwenkachse 7 stattfindet, obwohl der Sitzrahmen 4 und der Rückenlehnenrahmen 5 jeweils unmittelbar an dem Grundrahmen angebracht sind. Zum Zweck der Bewegungskopplung und Zwangssynchronisierung sind an einer Unterstrebe 9 des Rückenlehnenrahmens zwei nach unten abragende, als Steuerflächen dienende Steuernocken 10 angebracht, die in Wechselwirkung mit zwei endseitig am Sitzrahmen 4 einstückig ausgeführten, als Steuerflächen dienenden Steuernocken 11 stehen und deren Außenoberflächen 12, 13 aufeinander abwälzen können. Eine horizontal ausgerichtete Schwenkachse 7 des Rückenlehnenrahmens 5 schneidet eine Verstelleinrichtung 17, die für eine elektromotorische Neigungseinstellung des Rückenlehnenrahmens 5 unabhängig von der Synchronisierungseinrichtung 6 um eine Schwenkachse 8 vorgesehen ist, sowie Seitenwangen 20 des Rückenlehnenrahmens 5. Die Verstelleinrichtung ermöglicht somit eine Übersteuerung der Zwangsbewegung der Synchronisierungseinrichtung 6, um eine besonders vorteilhafte, benutzerindividuelle Neigungsverstellung des Rückenlehnenrahmens 5 zu gewährleisten.

Der Sitzrahmen 4 weist, wie in der Fig. 2 erkennbar ist, in einem hinteren, dem Rückenlehnenrahmen 5 zugeordneten Bereich eine konvexe Auflagefläche 25 auf, die auf einer korrespondierend, also konkav geformten Auflagefläche 26 des Grundrahmens 2 in der Art einer Schwenkbewegung abgleiten kann. In einem vorderen, dem Rückenlehnenrahmen 5 abgewandten Bereich ist der Sitzrahmen 4 mit einem geschlossenen Führungsauge 14 versehen, das eine bogenförmige Krümmung aufweist und das für einen Eingriff eines Führungszapfens 15 vorgesehen ist, der am Grundrahmen 2 befestigt ist. Das Zentrum der Krümmung des Führungsauges 14, das Zentrum der konvexen Auflagefläche 25, sowie das Zentrum bzw. der Mittelpunkte der konkav geformten Auflagefläche 26, die auch als abschnittsweise zylinderhülsenförmig geformte Gleitflächen beschrieben werden können, sind konzentrisch zueinander angeordnet und bestimmen eine Schwenkachse 16 des Sitzrahmens 4. Die Schwenkachse 16 ist parallel zu den Schwenkachsen 7 und 8 des Rückenlehnenrahmens 5 und der Verstelleinrichtung 17 ausgerichtet und liegt bei lagerichtig im Kraftfahrzeug eingebautem Kraftfahrzeugsitz 1 oberhalb des Sitzrahmens 4 und auch oberhalb einer nicht dargestellten Oberfläche des Sitzflächenpolsters. Die Schwenkachse 16 ist keine körperliche Achse, sondern wird lediglich von den Gleitlagerungen 14, 15, 25, 26 zwischen dem Grundrahmen 2 und dem Sitzrahmen 4 bestimmt und wird daher auch als virtuelle Schwenkachse 16 bezeichnet. Dass sich die Radien R1 und R2 für die Auflagefläche 25 und das Führungsauge 14 unterscheiden, ist für die Funktion der Schwenkachse 16 ohne Belang, da die Schwenkbeweglichkeit durch die Konzentrizität der gekrümmten Flächen gewährleistet ist.

Die konvex geformten Steuernocken 10 des Rückenlehnenrahmens 5 sind für eine Abwälzbewegung auf den ebenfalls konvex geformten Steuernocken 11 des Sitzrahmens 4 ausgebildet und sind für eine nichtproportionale Bewegungsübertragung zwischen Sitzrahmen 4 und Rückenlehnenrahmen 5 gestaltet. Bei einer Bewegung des Rückenlehnenrahmens 5 bezüglich der Schwenkachse 16 um einen Winkelbetrag kommt es somit zwar zu einer zwangsläufigen Schwenkbewegung des Sitzrahmens 4 um die Schwenkachse 7. Der Winkelbetrag der Schwenkbewegung des Sitzrahmens 4 ist jedoch von der relativen Stellung von Sitzrahmen 4 und Rückenlehnenrahmen 5 abhängig und variiert über den Winkelbereich, den der Rückenlehnenrahmen 5 gegenüber dem Sitzrahmen 4 bzw. gegenüber einer Vertikalrichtung 18 einnehmen kann. Damit liegt also über den gesamten Winkelbereich keine gleichförmige Bewegungsübertragung zwischen dem Sitzrahmen 4 und dem Rückenlehnenrahmen 5 vor, vielmehr variiert die Änderung des Neigungswinkels des Rückenlehnenrahmens 5 gegenüber der Vertikalrichtung 18 nach einer vorgebbaren, vorzugsweise nichtlinearen, Funktion gegenüber einem Neigungswinkel des Sitzflächenrahmens 4, der insbesondere bezogen auf die Fahrtrichtung ermittelt werden kann. Damit kann eine besonders vorteilhafte, selbsttätige oder automatische, anatomische korrekte Anpassung der Neigung des Rückenlehnenrahmens 5 gegenüber dem Sitzrahmen 4 bei einer Verstellung des Sitzrahmens 4 erreicht werden. Bei dem vorliegenden Ausführungsbeispiel ist eine gleichsinnige Schwenkbewegung von Sitzrahmen 4 und Rückenlehnenrahmen 5 vorgesehen. Bei einer nicht dargestellten Ausführungsform der Erfindung kann auch eine gegensinnige Schwenkbewegung des Rückenlehnenrahmens gegenüber dem Sitzrahmen verwirklicht sein. Denkbar ist auch, dass ab einer vorgebbaren Winkelstellung des Sitzrahmens keine weitere Verstellung des Rückenlehnenrahmens erfolgt, um anatomisch ungünstige Rückenlehnenstellungen vermeiden zu können.

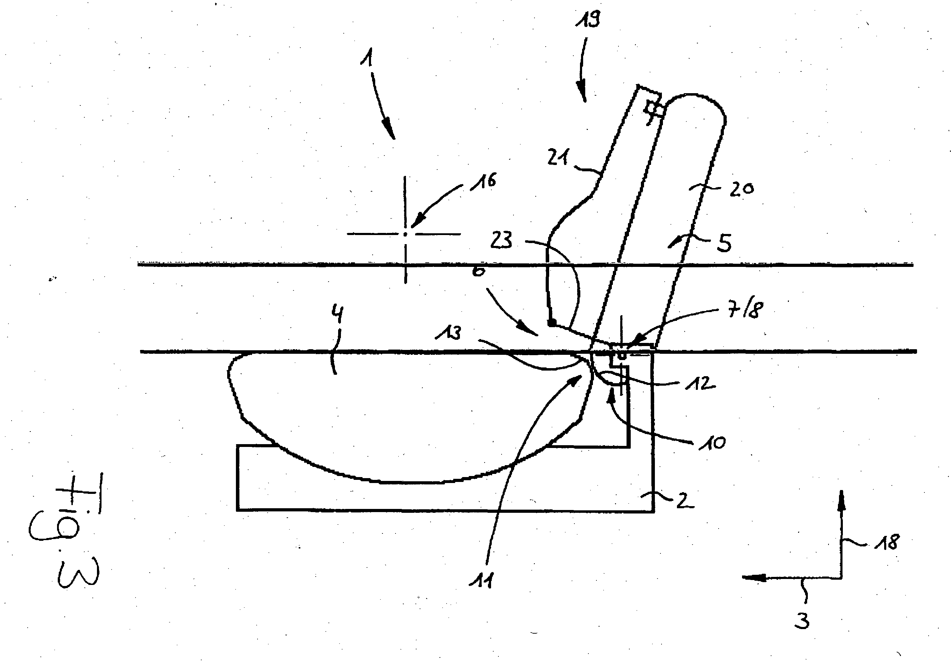

Wie in der Fig. 3 dargestellt, kann dem Rückenlehnenrahmen 5 eine Konturverstelleinrichtung 19 zugeordnet sein, die bei einer Ausführungsform der Erfindung mit der Synchronisierungseinrichtung 6 zwangsgekoppelt ist und die für eine Veränderung einer Profilierung eines an dem Rückenlehnenrahmen 5 anbringbaren Rückenpolsters vorgesehen ist. Die Konturverstelleinrichtung 19 weist zwei sich jeweils im Wesentlichen längs von Seitenwangen 20 des Rückenlehnenrahmens 5 erstreckte, schwenkbar am oberen Ende des Rückenlehnenrahmens 5 in Führungsösen 23 angebrachte, gekrümmt ausgeführte Konturstangen 21 auf.

Die Konturstangen 21 sind für eine Veränderung einer Profilierung des Rückenlehnenpolsters vorgesehen und sind bei dem fertiggestelltem Kraftfahrzeugsitz 1 nicht sichtbar. An einem dem Sitzrahmen 4 zugewandten Endbereich sind die Konturstangen 21 schwenkbeweglich an Lenkhebeln 23 angebracht, die starr mit dem Grundrahmen 2 verbunden sind.

Durch eine geeignete Auslegung kann erreicht werden, dass bei einer Veränderung des Neigungswinkels des Rückenlehnenrahmens 5 gegenüber einer Vertikalrichtung eine Ansteuerung der Konturstangen 21 durch die Veränderung der Lage des Rückenlehnenrahmens 5 gegenüber dem Grundrahmen 2 erfolgt, so dass eine Veränderung der von den Konturstangen 21 bestimmten Profilierung des Rückenlehnenpolsters bewirkt werden kann. Dabei kann die Ansteuerung der Konturstangen 21 über die Lenkhebel 23 derart ausgebildet sein, dass bei einer Verschwenkung des Rückenlehnenrahmens 5 aus einer aufrechten Stellung in eine geneigte Stellung eine vorliegende starke Profilierung in eine abgeschwächte Profilierung geändert wird. Eine umgekehrte Ansteuerung der Konturstangen 21 ist ebenfalls denkbar. Für eine zuverlässige Synchronisation der Konturstangen 21 kann eine im Wesentlichen horizontal verlaufende, parallel zu den Schwenkachsen 7, 8 ausgerichtete, nicht dargestellte Koppelstange 22 vorgesehen werden, die rechtwinklig nach unten ragende Fortsätze aufweist, die in einer Schwenkführung festgelegt sind. Die Schwenkführung kann schwenkbeweglich am Rückenlehnenrahmen 5 angebracht werden und eine stabile Führung für die Koppelstange und somit auch für die Konturstangen 21 darstellen. Die nicht dargestellte Schwenkführung kann mit einer elektromotorischen Ansteuerung versehen sein, um eine von der Neigung des Rückenlehnenrahmens 5 abhängige Zwangsbewegung der Konturstangen 21 zu übersteuern und somit dem Benutzer eine von der Neigung des Rückenlehnenrahmens 5 unabhängige Profilierung des Rückenlehnenpolsters zu ermöglichen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Kraftfahrzeugsitz
- 2: Grundrahmen
- 3: Fahrtrichtung (Horizontalrichtung)
- 4: Sitzrahmen
- 5: Rückenlehnenrahmen
- 6: Synchronisierungseinrichtung
- 7: Schwenkachse (Rückenlehenrahmen)
- 8: Schwenkachse (Verstelleinrichtung)
- 9: Unterstrebe (Rückenlehnenrahmen)
- 10: Steuernocken (Rückenlehnenrahmen)
- 11: Steuernocken (Sitzrahmen)
- 12: Außenoberfläche (Sitzrahmen)
- 13: Lagerfläche (Grundrahmen)
- 14: Führungsauge (Sitzrahmen)
- 15: Führungszapfen (Grundrahmen)
- 16: Schwenkachse (Sitzrahmen)
- 17: Verstelleinrichtung
- 18: Vertikalrichtung
- 19: Konturverstelleinrichtung
- 20: Seitenwangen
- 21: Konturstangen
- 22: Koppelstange
- 23: Lenkhebel
- 24: Schwenkführung
- 25: Auflagefläche (Sitzrahmen)
- 26: Auflagefläche (Grundrahmen)

## Patentansprüche

1. Kraftfahrzeugsitz (1) mit einem Grundrahmen (2) zur Anbringung an einem Kraftfahrzeug sowie mit einem Sitzrahmen (4) und mit einem Rückenlehnenrahmen (5), die verstellbar an dem Grundrahmen (2) angebracht sind und die mittels einer Synchronisierungseinrichtung (6) derart zwangsgekoppelt sind, dass bei einer Bewegung des Rückenlehnenrahmens (5) relativ zum Grundrahmen (2) eine zwangsläufige Schwenkbewegung des Sitzrahmens (4) relativ zum Grundrahmen (2) und/oder zum Rückenlehnenrahmen (5) stattfindet,
wobei
die Synchronisierungseinrichtung (6) für eine nichtproportionale Schwenkbewegung des Sitzrahmens (4) bei einer Bewegung des Rückenlehnenrahmens (5) relativ zum Grundrahmen (2) ausgebildet ist, wobei der Sitzrahmen (4) schwenkbeweglich an dem Grundrahmen (2) angebracht ist und eine virtuelle Schwenkachse (16) für den Sitzrahmen (4) beabstandet vom Sitzrahmen (4) in einem dem Grundrahmen (2) abgewandten Bereich, vorzugsweise oberhalb einer Sitzfläche des Sitzrahmens (4), besonders bevorzugt ortsfest, angeordnet ist,
**dadurch gekennzeichnet, dass**
die Synchronisierungseinrichtung (6) eine erste, dem Sitzrahmen (4) zugeordnete, konvex geformte, Steuerfläche (11), und eine zweite, dem Rückenlehnenrahmen (5) zugeordnete, konvex geformte, Steuerfläche (10) aufweist, die für eine zwangsläufige Bewegungeübertragung zwischen dem Sitzrahmen (4) und dem Rückenlehnenrahmen (5) ausgeführt sind.

2. Kraftfahrzeugsitz nach Anspruch 1,
**dadurch gekennzeichnet, dass**
eine Schwenkachse (7) des Rückenlehnenrahmens (5) im Wesentlichen parallel zur Schwenkachse (16) des Sitzrahmens (4) ausgerichtet ist und den Rückenlehnenrahmen (5) schneidet.

3. Kraftfahrzeugsitz nach Anspruch 2,
**dadurch gekennzeichnet, dass**
die Steuerflächen (10, 11) des Sitzrahmens (4) und des Rückenlehnenrahmens (5) derart zueinander angeordnet sind, dass bei einer Relativbewegung des Sitzrahmens (4) gegenüber dem Grundrahmen (2) eine Abwälzbewegung der Steuerflächen (10, 11), insbesondere in der Art von Steuernocken, stattfindet.

4. Kraftfahrzeugsitz nach einem der vorhergehenden Ansprüche,
**dadurch gekennzeichnet, dass**
der Sitzrahmen (4) in einem dem Rückenlehnenrahmen (5) abgewandten Vorderbereich eine bogenförmige Langlochführung (14) aufweist, die mittels eines Führungszapfens (15) am Grundrahmen (2) angebracht ist, und dass der Grundrahmen (2) in einem dem Rückenlehenrahmen (5) zugewandten Hinterbereich eine korrespondierend zum Sitzrahmen (4) geformte, abschnittsweise zylinderhülsenförmige Gleitfläche (13) aufweist, auf der der Sitzrahmen (4) mittels der Synchronisierungseinrichtung (6) zwangsgeführt verschiebbar aufliegt.

5. Kraftfahrzeugsitz nach einem der vorhergehenden Ansprüche,
**dadurch gekennzeichnet, dass**
die Synchronisierungseinrichtung (6) für gleichsinnige Schwenkbewegung von Sitzrahmen (4) und Rückenlehnenrahmen (5) ausgebildet ist.

6. Kraftfahrzeugsitz nach einem der vorhergehenden Ansprüche,
**dadurch gekennzeichnet, dass**
der Rückenlehnenrahmen (5) eine der Synchronisierungseinrichtung (6) zugeordnete Verstelleinrichtung (17) aufweist, die für eine Neigungsverstellung des Rückenlehnenrahmens (5) unabhängig von einer Stellung des Sitzrahmens (4) ausgebildet ist.

7. Kraftfahrzeugsitz nach einem der vorhergehenden Ansprüche,
**dadurch gekennzeichnet, dass**
dem Rückenlehnenrahmen (5) eine Konturverstelleinrichtung (19) zugeordnet ist, die vorzugsweise mit der Synchronisierungseinrichtung (6) zwangsgekoppelt ist, und die für eine Veränderung einer Profilierung eines an dem Rückenlehnenrahmen (5) anbringbaren Rückenpolsters vorgesehen ist.

8. Kraftfahrzeugsitz nach Anspruch 7,
**dadurch gekennzeichnet, dass**
die Konturverstelleinrichtung (19) zwei sich jeweils im Wesentlichen längs von Seitenwangen (20) des Rückenlehnenrahmens (5) erstreckte, schwenkbar am Rückenlehnenrahmen (5) angebrachte, gekrümmt ausgeführte Konturstangen (21) aufweist, die vorzugsweise mittels einer zwischen den Seitenwangen (20) ausschwenkbar angeordneten Koppelstänge zwangsgekoppelt sind.

## Claims

1. Motor vehicle seat (1) comprising a base frame (2) for attachment to a motor vehicle, as well as comprising a seat frame (4) and a backrest frame (5) which are adjustably attached to the base frame (2) and are positively coupled by means of a synchronisation device (6) in such a way that, during a movement of the backrest frame (5) in relation to the base frame (2), a positive pivot movement of the seat frame (4) in relation to the base frame (2) and/or to the backrest frame (5) takes place, the synchronisation device (6) being designed for a non-proportional pivot movement of the seat frame (4) during a movement of the backrest frame (5) in relation to the base frame (2), the seat frame (4) being attached in a pivotable manner to the base frame (2) and a virtual pivot axis (16) for the seat frame (4) being arranged at a spacing from the seat frame (4) in a region remote from the base frame (2), preferably above a seat surface of the seat frame (4), particularly preferably in a stationary manner, **characterised in that** the synchronisation device (6) has a first convex control surface (11) which is facing the seat frame (4) and a second convex control surface (10) which is facing the backrest frame (5), which control surfaces are designed for positive transmission of movement between the seat frame (4) and the backrest frame (5).

2. Motor vehicle seat according to claim 1, **characterised in that** a pivot axis (7) of the backrest frame (5) is oriented substantially parallel to the pivot axis (16) of the seat frame (4) and intersects the backrest frame (5).

3. Motor vehicle seat according to claim 2, **characterised in that** the control surfaces (10, 11) of the seat frame (4) and of the backrest frame (5) are arranged with respect to one another in such a way that, during a relative movement of the seat frame (4) with respect to the base frame (2), a rolling movement of the control surfaces (10, 11) takes place, in particular in the manner of control cams.

4. Motor vehicle seat according to any of the preceding claims, **characterised in that** the seat frame (4) has, in a front region facing away from the backrest frame (5), a curved slot guide (14) which is attached to the base frame (2) by means of a guide pin (15), and **in that** the base frame (2) has, in a rear region facing towards the backrest frame (5), a sliding surface (13) which is shaped in a manner corresponding to the seat frame (4) and is in the form of a cylindrical sleeve in some portions, on which sliding surface the seat frame (4) lies in such a manner that it can be positively displaced by means of the synchronisation device (6).

5. Motor vehicle seat according to any of the preceding claims, **characterised in that** the synchronisation device (6) is designed for pivot movements of the seat frame (4) and backrest frame (5) in the same direction.

6. Motor vehicle seat according to any of the preceding claims, **characterised in that** the backrest frame (5) has an adjustment device (17) which is assigned to the synchronisation device (6) and is designed for adjusting the inclination of the backrest frame (5) independently of a position of the seat frame (4).

7. Motor vehicle seat according to any of the preceding claims, **characterised in that** the backrest frame (5) is facing a contour adjustment device (19) which is preferably positively coupled to the synchronisation device (6) and is provided for changing a profile of a back cushion which can be attached to the backrest frame (5).

8. Motor vehicle seat according to claim 7, **characterised in that** the contour adjustment device (19) has two curved contour rods (21) which each extend substantially along lateral cheeks (20) of the backrest frame (5), are pivotably attached to the backrest frame (5) and are preferably positively coupled by means of a coupling rod which is arranged between the lateral cheeks (20) such that it can be pivoted outward.

## Revendications

1. Siège de véhicule automobile (1), comportant un cadre de base (2) destiné à être monté sur un véhicule automobile, ainsi qu'un cadre d'assise (4) et un cadre de dossier (5), qui sont montés de manière réglable sur le cadre de base (2) et qui sont couplés de force au moyen d'un dispositif de synchronisation (6), de telle sorte que dans le cas d'un mouvement du cadre de dossier (5) par rapport au cadre de base (2), il se produit un mouvement de pivotement forcé du cadre d'assise (4) par rapport au cadre de base (2) et/ou par rapport au cadre de dossier (5), le dispositif de synchronisation (6) étant conçu pour permettre un mouvement de pivotement non proportionnel du cadre d'assise (4) lors d'un mouvement du cadre de dossier (5) par rapport au cadre de base (2), ledit cadre d'assise (4) étant monté de manière mobile en pivotement sur le cadre de base (2) et un axe de pivotement (16) virtuel pour le cadre d'assise (4) étant disposé, de préférence de manière fixe, à distance du cadre d'assise (4) dans une zone opposée au cadre de base (2), de préférence au-dessus d'une surface d'assise du cadre d'assise (4), **caractérisé en ce que** le dispositif de synchronisation (6) comporte une première surface de commande (11) à forme convexe associée au cadre d'assise (4), et une deuxième surface de commande (10) à forme convexe associée au cadre de dossier (5), qui sont réalisées pour un transfert forcé du mouvement entre le cadre d'assise (4) et le cadre de dossier (5).

2. Siège de véhicule automobile selon la revendication 1 **caractérisé en ce qu'**un axe de pivotement (7) du cadre de dossier (5) est orienté sensiblement parallèlement à l'axe de pivotement (16) du cadre d'assise (4) et coupe le cadre de dossier (5).

3. Siège de véhicule automobile selon la revendication 2, **caractérisé en ce que** les surfaces de commande (10, 11) du cadre d'assise (4) et du cadre de dossier (5) sont disposées l'une par rapport à l'autre de telle sorte que lors d'un mouvement relatif du cadre d'assise (4) par rapport au cadre de base (2), il se produit un mouvement de roulement des surfaces de commande (10, 11), en particulier à la manière de cames de commande.

4. Siège de véhicule automobile selon l'une quelconque des revendications précédentes, **caractérisé en ce que** le cadre d'assise (4) comporte, dans une zone avant opposée au cadre de dossier (5), un guidage (14) en forme de trou oblong courbe, qui est monté sur le cadre de base (2) au moyen d'un tourillon de guidage (15), et **en ce que** le cadre de base (2) comporte, dans une zone arrière orientée vers le cadre de dossier (5), une surface de glissement (13) en forme de gaine cylindrique par sections, qui est formée en correspondance avec le cadre d'assise (4) et sur laquelle repose le cadre d'assise (4) de manière coulissante par guidage forcé au moyen du dispositif de synchronisation (6).

5. Siège de véhicule automobile selon l'une quelconque des revendications précédentes, **caractérisé en ce que** le dispositif de synchronisation (6) est conçu pour un mouvement de pivotement de même sens du cadre d'assise (4) et du cadre de dossier (5).

6. Siège de véhicule automobile selon l'une quelconque des revendications précédentes, **caractérisé en ce que** le cadre de dossier (5) comporte un dispositif de réglage (17), qui est associé au dispositif de synchronisation (6) et qui est conçu pour un réglage en inclinaison du cadre de dossier (5) indépendamment de la position du cadre d'assise (4).

7. Siège de véhicule automobile selon l'une quelconque des revendications précédentes, **caractérisé en ce qu'**un dispositif de réglage du profil (19) étant associé au cadre de dossier (5) est, de préférence, couplé de force au dispositif de synchronisation (6) et est prévu pour faire varier le profil d'un rembourrage du dossier montable sur le cadre de dossier (5).

8. Siège de véhicule automobile selon la revendication 7, **caractérisé en ce que** le dispositif de réglage du profil (19) comporte deux barres de profilage (21) arquées, qui s'étendent, respectivement, sensiblement le long des parois latérales (20) du cadre de dossier (5) et sont montées pivotantes sur le cadre de dossier (5) et qui, de préférence, sont couplées de force au moyen d'une barre de couplage disposée de manière pivotante entre les parois latérales (20).
